# EUROPÄISCHE PATENTSCHRIFT

(11) **EP 3 288 894 B1**
(45) Veröffentlichungstag und Bekanntmachung des Hinweises auf die Patenterteilung: **12.09.2018**
(21) Anmeldenummer: 16794302.6
(22) Anmeldetag: 09.11.2016
(51) Int. Cl.: C01B 33/027, B01J 8/18

(54) **WIRBELSCHICHTREAKTOR UND VERFAHREN ZUR HERSTELLUNG VON POLYKRISTALLINEM SILICIUMGRANULAT**
FLUIDIZED BED REACTOR AND METHOD FOR PRODUCING POLYCRYSTALLINE SILICON GRANULATE
RÉACTEUR À LIT FLUIDISÉ ET PROCÉDÉ DE PRODUCTION DE SILICIUM POLYCRISTALLIN GRANULAIRE

(30) Priorität: 02.12.2015 DE 102015224120
(43) Veröffentlichungstag der Anmeldung: 07.03.2018
(73) Patentinhaber: Wacker Chemie AG, 81737 München (DE)
(72) Erfinder: PEDRON, Simon, 84489 Burghausen (DE); BAUMANN, Bernhard, 84547 Emmerting (DE)
(74) Vertreter: Potten, Holger
(86) Internationale Anmeldenummer: PCT/EP2016/077031
(87) Internationale Veröffentlichungsnummer: WO 2017/092985

(56) Entgegenhaltungen:
- WO-A1-2007/145474
- WO-A1-2014/169705
- US-A1- 2012 100 059
- "GTA Flexible Graphite Technical Data Sheet 435", , 21. Januar 2013 (2013-01-21), XP055243059, Gefunden im Internet: URL:http://www.graftech.com/wp-content/upl oads/2015/03/TDS435-GTA.pdf [gefunden am 2016-01-20]
- Graftech: "GFT Graphite Felt", , 13. April 2014 (2014-04-13), XP055330050, Gefunden im Internet: URL:http://www.graftech.com/wp-content/upl oads/2014/12/GRAFSHIELD(TM)-GFT-Felt-Sell- Sheet.pdf [gefunden am 2016-12-19]

## Beschreibung

Die Erfindung betrifft einen Wirbelschichtreaktor und ein Verfahren zur Herstellung von polykristallinem Siliciumgranulat.

Polykristallines Siliciumgranulat wird in einem Wirbelschicht- bzw. Fließbettreaktor produziert. Dies geschieht durch Fluidisierung von Siliciumpartikeln mittels einer Gasströmung in einer Wirbelschicht, wobei diese über eine Heizvorrichtung auf hohe Temperaturen aufgeheizt wird. Durch Zugabe eines siliciumhaltigen Reaktionsgases erfolgt eine Abscheidereaktion an der heißen Partikeloberfläche. Dabei scheidet sich elementares Silicium auf den Siliciumpartikeln ab und die einzelnen Partikel wachsen im Durchmesser an. Durch den regelmäßigen Abzug von angewachsenen Partikeln und Zugabe kleinerer Siliciumkeimpartikel kann das Verfahren kontinuierlich mit allen damit verbundenen Vorteilen betrieben werden. Als siliciumhaltiges Eduktgas sind Silicium-Halogenverbindungen (z.B. Chlorsilane oder Bromsilane), Monosilan (SiH₄), sowie Mischungen dieser Gase mit Wasserstoff beschrieben.

Derartige Abscheideverfahren und Vorrichtungen hierzu sind bekannt. Der entsprechende Stand der Technik sowie die vielfältigen Anforderungen an einen Werkstoff für ein Reaktorrohr eines Wirbelschichtreaktors zur Herstellung von polykristallinem Siliciumgranulat werden in DE 102014212049 dargelegt. Diese Anmeldung offenbart einen Wirbelschichtreaktor mit einem Reaktorrohr, dessen Grundkörper zu mindestens 60 Gew.-% aus Siliciumcarbid besteht, wobei der Grundkörper zumindest auf seiner Innenseite eine CVD-Beschichtung mit einer Schichtdicke von wenigstens 5 µm, die zu mindestens 99,995 Gew.-% aus Siliciumcarbid besteht, aufweist. Siliciumcarbid weist das für keramische Materialien typische spröde Bruchverhalten auf. Des Weiteren können sich wegen des hohen E-Moduls, i.d.R. E > 200 GPa, hohe thermisch induzierte Spannungen während des Reaktorbetriebs aufbauen. Um diese Spannungen niedrig zu halten, müssen der Reaktoraufbau und die Prozessführung so gestaltet werden, dass Temperaturgradienten in axialer, radialer und tangentialer Richtung möglichst gering sind.

Aufgabe der vorliegenden Erfindung ist die weitere Verbesserung eines Wirbelschichtreaktors zur Herstellung von polykristallinem Siliciumgranulat sowie des Verfahrens zur Herstellung von polykristallinem Siliciumgranulat.

Diese Aufgabe wird gelöst durch einen Wirbelschichtreaktor umfassend einen Reaktorbehälter (1), ein Reaktorrohr (2) und einen Reaktorboden (15) innerhalb des Reaktorbehälters (1), wobei das Reaktorrohr (2) aus einem Grundkörper und einer Oberflächen-Beschichtung besteht und wobei sich zwischen einer Außenwand des Reaktorrohrs (2) und einer Innenwand des Reaktorbehälters (1) ein Zwischenmantel (3) befindet, weiterhin umfassend eine Heizvorrichtung (5), wenigstens eine Bodengasdüse (9) zur Zuführung von Fluidisierungsgas sowie wenigstens eine Sekundärgasdüse (10) zur Zuführung von Reaktionsgas, eine Zuführeinrichtung (11), um Silicium-Keimpartikel zuzuführen, eine Entnahmeleitung (14) für polykristallines Siliciumgranulat sowie eine Einrichtung zum Abführen von Reaktorabgas (16), dadurch gekennzeichnet, dass der Grundkörper des Reaktorrohrs aus einem Grundwerkstoff mit einem Aschegehalt < 2000 ppmw besteht und die Oberflächen-Beschichtung eine CVD-Beschichtung mit einer Schichtdicke von 5 µm bis 700 µm ist, die zu mindestens 99,995 Gew.-% aus Siliciumcarbid besteht.

Der Grundkörper des Reaktorrohrs besteht vorzugsweise aus einem Grundwerkstoff mit einem Aschegehalt < 50 ppmw, besonders bevorzugt aus einem Grundwerkstoff mit einem Aschegehalt < 1 ppmw. Der Grundwerkstoff hat vorzugsweise einen thermischen Ausdehnungskoeffizienten (Mittelwert zwischen 20 und 1000°C) von 3,5·10⁻⁶ bis 6,0·10⁻⁶ K⁻¹, bevorzugt von 4·10⁻⁶ bis 5,5·10⁻⁶ K⁻¹. Insbesondere bevorzugt entspricht der thermische Ausdehnungskoeffizient des Grundwerkstoffs dem thermischen Ausdehnungskoeffizienten von Siliciumcarbid (4,6·10⁻⁶ bis 5,0·10⁻⁶ K⁻¹).

Grundkörper und Beschichtung haben somit vorzugsweise im Wesentlichen den gleichen thermischen Ausdehnungskoeffizienten.

Als Grundwerkstoff geeignet sind isostatisch gepresster Grafit sowie Werkstoffe, deren Hauptbestandteil Kohlenstoff ist und die die genannten Eigenschaften besitzen. Dies sind beispielsweise ein angepasster Kohlenstofffaserverstärkter Kohlenstoff (CFC-Werkstoff), ein Kohlenstoff-Kohlenstoff (C/C)-Kompositwerkstoff oder eine gewickelte Grafitfolie. Vorzugsweise handelt es sich bei dem Grundwerkstoff um isostatisch gepressten Grafit, welcher kurz auch als Isografit bezeichnet wird.

Die Oberflächen-Beschichtung mit SiC liegt auf der Rohrinnenseite oder auf die Rohrinnen- und der Rohraußenseite des Reaktorrohres vor. Die Stirnflächen des Reaktorrohres können ebenfalls eine Oberflächen-Beschichtung aufweisen.

Die Eindringtiefe der CVD-Beschichtung in den Grundwerkstoff ist vorzugsweise kleiner als die 2,5-fache maximale Rautiefe Rₘₐₓ.

Die CVD-Beschichtung mit SiC hat vorzugweise eine Schichtdicke von 15 bis 500 µm, besonders bevorzugt eine Schichtdicke von 50 bis 200 µm.

Die erfindungsgemäß verwendeten Materialien für das Reaktorrohr ermöglichen einen Einsatz bis zu einer Temperatur von mindestens 1600°C, was einen Vorteil z.B. gegenüber dem im Stand der Technik vorgeschlagenen Siliciumnitrid darstellt, welches nur bis 1250°C beständig ist.

Das Grafitrohr kann einteilig, aber auch mehrteilig hergestellt werden, d.h. aus zwei oder mehr Rohrabschnitten. Dadurch kann einerseits die Fertigung erleichtert werden, andererseits können bei Defekt auch nur einzelne Abschnitte ausgetauscht werden. Die Beschichtung des Grafitrohres bzw. der Teile des Grafitrohres mit Siliciumcarbid erfolgt in einem CVD-Reaktor in bekannter Art und Weise.

Beim erfindungsgemäßen Wirbelschichtreaktor beinhaltet der Zwischenmantel vorzugweise ein Isolationsmaterial und ist mit einem Inertgas gefüllt bzw. wird mit einem Inertgas gespült. Als Inertgas wird vorzugweise Stickstoff verwendet.

Der Druck im Zwischenmantel ist vorzugweise höher als im Reaktionsraum.

Die hohe Reinheit der SiC-Beschichtung von mindestens 99,995 Gew.-% SiC stellt sicher, dass Dotierstoffe (Elektronendonatoren und -akzeptoren, bspw. B, Al, As, P), Metalle, Kohlenstoff, Sauerstoff oder chemische Verbindungen dieser Stoffe in den oberflächennahen Bereichen des Reaktorrohrs nur in niedrigen Konzentrationen vorliegen, sodass die einzelnen Elemente weder durch Diffusion noch durch Abrasion in nennenswerter Menge in die Wirbelschicht gelangen können.

Es ist kein freies Silicium und kein freier Kohlenstoff an der Oberfläche enthalten. Dadurch ist Inertheit gegenüber H₂, Chlorsilanen, HCl und N₂ gegeben.

Eine Kontamination des polykristallinen Siliciumgranulats mit Kohlenstoff wird, durch die hochreine CVD-Beschichtung verhindert, denn nennenswerte Mengen an Kohlenstoff würden von reinem SiC nur in Kontakt mit flüssigem Silicium übertragen.

Die Erfindung betrifft auch ein Verfahren zur Herstellung von polykristallinem Siliciumgranulat in dem erfindungsgemäßen Wirbelschichtreaktor mit neuartigem Reaktorrohr, umfassend Fluidisierung von Siliciumkeimpartikeln mittels einer Gasströmung in einer Wirbelschicht, die mittels einer Heizvorrichtung aufgeheizt wird, wobei durch Zugabe eines siliciumhaltigen Reaktionsgases polykristallines Silicium an den heißen Siliciumkeimpartikeloberflächen abgeschieden wird, wodurch das polykristalline Siliciumgranulat entsteht.

Vorzugweise wird das entstehende polykristalline Siliciumgranulat aus dem Wirbelschichtreaktor abgeführt. Anschließend werden vorzugweise Siliciumablagerungen an Wandungen von Reaktorrohr und anderen Reaktorbauteilen durch Zufuhr eines Ätzgases in die Reaktionszone entfernt. Das Ätzgas enthält vorzugsweise Chlorwasserstoff oder Siliciumtetrachlorid.

Ebenso ist es bevorzugt, während des Abscheidens von polykristallinem Silicium an den heißen Siliciumkeimpartikeloberflächen kontinuierlich Ätzgas zuzuführen, um Siliciumablagerungen an Wandungen von Reaktorrohr und anderen Reaktorbauteilen zu vermeiden. Die Zufuhr des Ätzgases erfolgt vorzugweise lokal in der sog. free board zone, die den Gasraum über der Wirbelschicht bezeichnet. Der Wandbelag kann also zyklisch im Wechsel mit dem Abscheideprozess abgeätzt werden. Alternativ kann im Abscheidebetrieb kontinuierlich lokal Ätzgas zugegeben werden, um die Entstehung von Wandbelag zu vermeiden.

Vorzugweise wird das Verfahren kontinuierlich betrieben, indem durch Abscheidung im Durchmesser angewachsene Partikel aus dem Reaktor abgeführt und frische Siliciumkeimpartikel zudosiert werden.

Vorzugweise wird als siliciumhaltiges Reaktionsgas Trichlorsilan verwendet. Die Temperatur der Wirbelschicht im Reaktionsbereich beträgt in diesem Fall mehr als 900°C und bevorzugt mehr als 1000°C. Vorzugweise beträgt die Temperatur der Wirbelschicht mindestens 1100°C, besonders bevorzugt mindestens 1150°C und ganz besonders bevorzugt mindestens 1200°C. Die Temperatur der Wirbelschicht im Reaktionsbereich kann auch 1300-1400°C betragen. Besonders bevorzugt beträgt die Temperatur der Wirbelschicht im Reaktionsbereich 1150°C bis 1250°C. In diesem Temperaturbereich wird ein Maximum der Abscheiderate erreicht, die bei noch höheren Temperaturen wieder abfällt. Ebenso bevorzugt ist es, als siliciumhaltiges Reaktionsgas Monosilan einzusetzen. Die Temperatur der Wirbelschicht im Reaktionsbereich beträgt vorzugweise 550-850 °C. Weiterhin ist es bevorzugt, als siliciumhaltiges Reaktionsgas Dichlorsilan einzusetzen. Die Temperatur der Wirbelschicht im Reaktionsbereich beträgt vorzugweise 600-1000 °C. Beim Fluidisierungsgas handelt es sich vorzugsweise um Wasserstoff.

Das Reaktionsgas wird über eine oder mehrere Düsen in die Wirbelschicht eingedüst. Die lokalen Gasgeschwindigkeiten am Austritt der Düsen betragen vorzugsweise 0,5 bis 200 m/s. Die Konzentration des siliciumhaltigen Reaktionsgases beträgt bezogen auf die gesamte durch die Wirbelschicht strömende Gasmenge vorzugsweise 5 mol-% bis 50 mol-%, besonders bevorzugt 15 mol-% bis 40 mol-%.

Die Konzentration des siliciumhaltigen Reaktionsgases in den Reaktionsgasdüsen beträgt bezogen auf die gesamte durch die Reaktionsgasdüsen strömende Gasmenge vorzugsweise 20 mol-% bis 80 mol-%, besonders bevorzugt 30 mol-% bis 60 mol-%. Als siliciumhaltiges Reaktionsgas kommt vorzugweise Trichlorsilan zum Einsatz.

Der absolute Reaktordruck bewegt sich im Bereich von 1 bis 10 bar, vorzugsweise im Bereich 1,5 bis 5,5 bar.

Bei einem Reaktor mit einem Durchmesser von z. B. 400 mm beträgt der Massenstrom an siliciumhaltigem Reaktionsgas vorzugsweise 30 bis 600 kg/h. Der Wasserstoffvolumenstrom beträgt vorzugsweise 100 bis 300 Nm³/h. Für größere Reaktoren sind höhere Mengen an siliciumhaltigem Reaktionsgas und H₂ bevorzugt.

Dem Fachmann ist klar, dass einige Prozessparameter idealerweise abhängig von der Reaktorgröße ausgewählt werden. Daher sind im Folgenden auf die Reaktorquerschnittsfläche normierte Betriebsdaten genannt, in denen das erfindungsgemäße Verfahren vorzugweise angewendet wird.

Der spezifische Massenstrom an siliciumhaltigem Reaktionsgas beträgt vorzugsweise 400 - 6500 kg/(h*m²). Der spezifische Wasserstoffvolumenstrom beträgt vorzugsweise 800-4000 Nm³/(h*m²). Das spezifische Bettgewicht beträgt vorzugsweise 700-2000 kg/m². Die spezifische Siliciumkeimpartikeldosierrate beträgt vorzugsweise 7-25 kg/(h*m²). Die spezifische Reaktorheizleistung beträgt vorzugsweise 800-3000 kW/m²⁰. Die Verweilzeit des Reaktionsgases in der Wirbelschicht beträgt vorzugsweise 0,1 bis 10 s, besonders bevorzugt 0,2 bis 5 s. Die bezüglich der vorstehend aufgeführten Ausführungsformen des erfindungsgemäßen Verfahrens angegebenen Merkmale können entsprechend auf die erfindungsgemäße Vorrichtung übertragen werden. Umgekehrt können die bezüglich der vorstehend ausgeführten Ausführungsformen der erfindungsgemäßen Vorrichtung angegebenen Merkmale entsprechend auf das erfindungsgemäße Verfahren übertragen werden. Diese und andere Merkmale der erfindungsgemäßen Ausführungsformen werden in der Figurenbeschreibung und in den Ansprüchen erläutert. Die einzelnen Merkmale können entweder separat oder in Kombination als Ausführungsformen der Erfindung verwirklicht werden. Weiterhin können sie vorteilhafte Ausführungen beschreiben, die selbstständig schutzfähig sind.

### Kurzbeschreibung der Figur

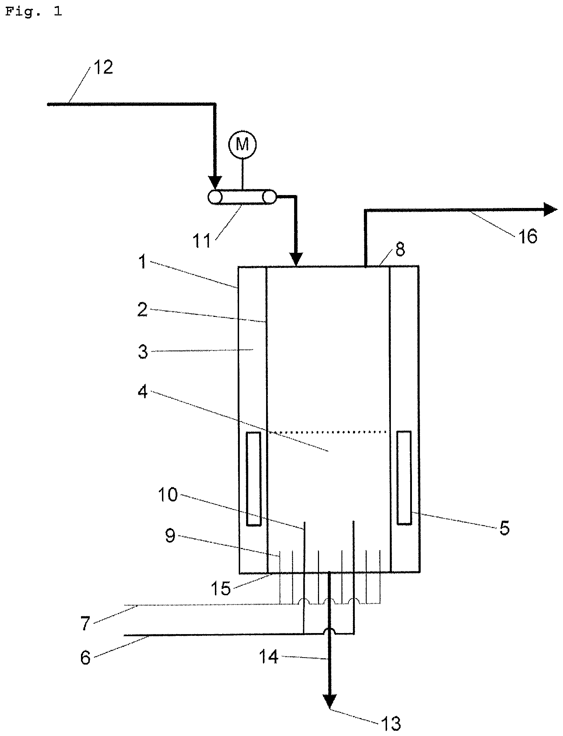

**Fig. 1** zeigt den schematischen Aufbau eines Wirbelschichtreaktors.

### Bezugszeichenliste

- **1**: Reaktorbehälter
- **2**: Reaktorrohr
- **3**: Zwischenmantel
- **4**: Wirbelschicht
- **5**: Heizvorrichtung
- **6**: Reaktionsgas
- **7**: Fluidisierungsgas
- **8**: Reaktorkopf
- **9**: Bodengasdüse
- **10**: Sekundärgasdüse
- **11**: Seedzuführeinrichtung
- **12**: Seed
- **13**: Polykristallines Siliciumgranulat
- **14**: Entnahmeleitung
- **15**: Reaktorboden
- **16**: Reaktorabgas

Der Wirbelschichtreaktor besteht aus einem Reaktorbehälter **1,** in den ein Reaktorrohr **2** eingesetzt ist.
Zwischen der Innenwand des Reaktorbehälters **1** und der Außenwand des Reaktorrohrs **2** befindet sich ein Zwischenmantel **3.**
Der Zwischenmantel **3** beinhaltet Isolationsmaterial und ist mit einem Inertgas gefüllt bzw. wird mit einem Inertgas gespült. Der Druck im Zwischenmantel **3** ist höher als im Reaktionsraum, der durch die Wandungen des Reaktorrohrs **2** begrenzt wird.
Im Inneren des Reaktorrohres **2** befindet sich die Wirbelschicht **4** aus Polysilicium-Granulat. Der Gasraum über der Wirbelschicht (über der gestrichelten Linie) wird üblicherweise als "free board zone" bezeichnet.
Die Wirbelschicht **4** wird mittels einer Heizvorrichtung **5** geheizt.
Als Zugase werden dem Reaktor das Fluidisierungsgas **7** und das Reaktionsgasgemisch **6** zugeführt. Die Gaszuführung erfolgt dabei gezielt über Düsen.
Das Fluidisierungsgas **7** wird über Bodengasdüsen **9** und das Reaktionsgasgemisch über sog. Sekundärgasdüsen (Reaktionsgasdüsen) **10** zugeführt.

Die Höhe der Sekundärgasdüsen **10** kann sich von der Höhe der Bodengasdüsen **9** unterscheiden.
Im Reaktor bildet sich durch die Anordnung der Düsen eine blasenbildende Wirbelschicht **4** mit zusätzlicher vertikaler Sekundärgaseindüsung aus.

Der Reaktorkopf **8** kann einen größeren Querschnitt als die Wirbelschicht **4** haben.
Über eine Seedzuführeinrichtung **11** mit elektrischem Antrieb **M** wird dem Reaktor Seed **12** am Reaktorkopf **8** zugeführt.
Das polykristalline Siliciumgranulat **13** wird über eine Entnahmeleitung **14** am Reaktorboden **15** entnommen.
Am Reaktorkopf **8** wird das Reaktorabgas **16** abgezogen.

### Abscheidung

In einem Wirbelschichtreaktor wird hochreines Polysilicium-Granulat aus Trichlorsilan abgeschieden. Als Fluidisierungsgas wird Wasserstoff eingesetzt. Die Abscheidung findet bei einem Druck von 300 kPa (abs) in einem Reaktorrohr mit einem Innendurchmesser von 500 mm statt. Es wird kontinuierlich Produkt abgezogen und die Seed-Zufuhr wird so geregelt, dass der Sauter-Durchmesser des Produkts 1000 ± 50 µm beträgt. Der Zwischenmantel wird mit Stickstoff gespült. Insgesamt wird 800 kg/h Gas zugeführt, wobei 17,5 mol % davon aus Trichlorsilan und der Rest aus Wasserstoff bestehen.

### Beispiel 1

Besteht das Reaktorrohr aus Isografit mit einem mittleren thermischen Ausdehnungskoeffizienten von 5,0*10⁻⁶ K⁻¹ mit CVD-Beschichtung einer mittleren Schichtdicke von 200 µm, kann eine Wirbelschichttemperatur von 1200°C erreicht werden.
Das Reaktionsgas reagiert bis zum Gleichgewicht. Somit können pro Stunde 38,9 kg Silicium abgeschieden werden.
Es ergibt sich eine flächenbezogene Ausbeute von 198 kg h⁻¹m⁻² Silicium.

### Vergleichsbeispiel 1

Besteht das Reaktorrohr dagegen aus Quarzglas, kann lediglich eine Wirbelschichttemperatur von 980°C erreicht werden, da ansonsten langfristig an der beheizten Reaktorrohraußenseite eine Temperatur von 1150°C überschritten wird.
Es können pro Stunde 29,8 kg Silicium abgeschieden werden (90% der Gleichgewichtsausbeute).
Es ergibt sich damit eine flächenbezogene Ausbeute von 152 kg h⁻¹m⁻² Silicium.
Die Unterschiede in den Mittelwerten der Dotierstoff-, Kohlenstoff- und Metallgehalte im Produkt zwischen den beiden Prozessen sind geringer als die statistische Streuung.

### Vergleichsbeispiel 2

Besteht das Reaktorrohr jedoch aus Isografit ohne Oberflächenbehandlung, greift der Wasserstoff den freien Kohlenstoff des Rohres an. Dies führt zur Beeinträchtigung der mechanischen Stabilität des Reaktorrohrs bis hin zum Versagen des Bauteils. Die Konsequenz ist Stoffaustausch zwischen dem Zwischenmantel und dem Reaktionsraum.
Während des Prozesses kann Wasserstoff mit einem kohlenstoffhaltigen Heizer und dem als Inertgas genutzten Stickstoff zum giftigen Produkt HCN reagieren.
Im Abscheideprozess kommt das Produkt mit Kontaminationen aus dem Heizraum und dem Kohlenstoff des Reaktorrohrs in Berührung. Auch Stickstoff baut sich im Produkt ein. Silane reagieren an der heißen Heizeroberfläche zu Siliciumnitrid, das dort weiße Aufwüchse bildet. Der Kontakt zu heißem, leitfähigem Granulat kann im Extremfall auch zu einem Erdschluss des Heizers führen. Der Reaktor muss außer Betrieb genommen werden. Das Reaktorrohr ist nicht mehr für weitere Läufe verwendbar.

### Vergleichsbeispiel 3

Ein Rohr aus Rüttelgrafit mit einem mittleren thermischen Ausdehnungskoeffizienten von 2,8 pm/K weist bereits nach der Beschichtung Risse auf. Ein Prozess mit 1200°C Temperatur kann zwar angefahren werden, allerdings wird der Grundwerkstoff durch den Wasserstoff schleichend angegriffen. Die sich bildenden Verbindungen Methan und carburierte Silane führen zur Verunreinigung des Produkts mit Kohlenstoff und dem Eintrag von carburierten Silanen und Methan in den Abgasstrang, was zu Problemen in der daran anschließenden Destillation führt.

### Vergleichsbeispiel 4

Besteht das Rohr aus SiSiC mit SiC-Beschichtung, ist der radiale Temperaturgradient in der Heizzone auf 13 K/mm begrenzt.

Wird ein erfindungsgemäßes Reaktorrohr verwendet, ist der radiale Temperaturgradient auf 21 K/mm begrenzt. In der Praxis bedeutet das, dass in einem Prozess mit SiC-Rohr die Heizzone länger als in einem Prozess mit beschichtetem Grafitrohr gestaltet werden muss. Dies schränkt die Freiheit im Prozess, insbesondere in der Wahl der Höhe der Wirbelschicht, ein.
Die vorstehende Beschreibung beispielhafter Ausführungsformen ist exemplarisch zu verstehen. Die damit erfolgte Offenbarung ermöglicht es dem Fachmann einerseits, die vorliegende Erfindung und die damit verbundenen Vorteile zu verstehen.

## Patentansprüche

1. Wirbelschichtreaktor zur Herstellung von polykristallinem Siliciumgranulat, umfassend einen Reaktorbehälter (1), ein Reaktorrohr (2) und einen Reaktorboden (15) innerhalb des Reaktorbehälters (1), wobei das Reaktorrohr (2) aus einem Grundkörper und einer Oberflächen-Beschichtung besteht und wobei sich zwischen einer Außenwand des Reaktorrohrs (2) und einer Innenwand des Reaktorbehälters (1) ein Zwischenmantel (3) befindet, weiterhin umfassend eine Heizvorrichtung (5), wenigstens eine Bodengasdüse (9) zur Zuführung von Fluidisierungsgas sowie wenigstens eine Sekundärgasdüse (10) zur Zuführung von Reaktionsgas, eine Zuführeinrichtung (11), um Silicium-Keimpartikel zuzuführen, eine Entnahmeleitung (14) für polykristallines Siliciumgranulat sowie eine Einrichtung zum Abführen von Reaktorabgas (16), **dadurch gekennzeichnet, dass** der Grundkörper des Reaktorrohrs aus einem Grundwerkstoff mit einem Aschegehalt < 2000 ppmw besteht und die Oberflächen-Beschichtung eine CVD-Beschichtung mit einer Schichtdicke von 5 µm bis 700 µm ist, die zu mindestens 99,995 Gew.-% aus Siliciumcarbid besteht.

2. Wirbelschichtreaktor nach Anspruch 1 **dadurch gekennzeichnet, dass** der Grundkörper des Reaktorrohrs (2) aus einem Grundwerkstoff mit einem Aschegehalt < 50 ppmw, bevorzugt aus einem Grundwerkstoff mit einem Aschegehalt < 1 ppmw besteht.

3. Wirbelschichtreaktor nach Anspruch 1 oder 2 **dadurch gekennzeichnet, dass** der Grundwerkstoff einen thermischen Ausdehnungskoeffizienten (Mittelwert zwischen 20 und 1000°C) von 3,5·10⁻⁶ bis 6,0·10⁻⁶ K⁻¹ hat.

4. Wirbelschichtreaktor nach Anspruch 3 **dadurch gekennzeichnet, dass** der thermische Ausdehnungskoeffizient des Grundwerkstoffs dem thermischen Ausdehnungskoeffizienten von Siliciumcarbid (4,6·10⁻⁶ bis 5,0·10⁻⁶ K⁻¹) entspricht.

5. Wirbelschichtreaktor nach Anspruch 3 **dadurch gekennzeichnet, dass** der Grundwerkstoff isostatisch gepresster Grafit oder Kohlenstofffaserverstärkter Kohlenstoff (CFC-Werkstoff), oder ein Kohlenstoff-Kohlenstoff (C/C)-Kompositwerkstoff oder eine gewickelte Grafitfolie ist.

6. Wirbelschichtreaktor nach Anspruch 5 **dadurch gekennzeichnet, dass** der Grundwerkstoff isostatisch gepresster Grafit ist.

7. Wirbelschichtreaktor nach einem der Ansprüche 1 bis 6, wobei die CVD-Beschichtung eine Schichtdicke von 15 - 500 µm aufweist.

8. Wirbelschichtreaktor nach einem der Ansprüche 1 bis 7, wobei der Zwischenmantel (3) ein Isolationsmaterial umfasst und mit einem Inertgas gefüllt ist oder gespült wird.

9. Verfahren zur Herstellung von polykristallinem Siliciumgranulat umfassend Fluidisierung von Siliciumkeimpartikeln mittels einer Gasströmung in einer Wirbelschicht, die mittels einer Heizvorrichtung aufgeheizt wird, wobei durch Zugabe eines siliciumhaltigen Reaktionsgases polykristallines Silicium an den heißen Siliciumkeimpartikeloberflächen abgeschieden wird, wodurch das polykristalline Siliciumgranulat entsteht, **dadurch gekennzeichnet, dass** es in einem Wirbelschichtreaktor nach einem der Ansprüche 1 bis 8 durchgeführt wird,.

10. Verfahren nach Anspruch 9, wobei das entstehende polykristalline Siliciumgranulat aus dem Wirbelschichtreaktor abgeführt und anschließend Siliciumablagerungen an Wandungen von Reaktorrohr und anderen Reaktorbauteilen durch Zufuhr eines Ätzgases in die Reaktionszone entfernt werden.

11. Verfahren nach Anspruch 10, wobei das Ätzgas Chlorwasserstoff oder Siliciumtetrachlorid enthält.

## Claims

1. Fluidized-bed reactor for producing granular polycrystalline silicon comprising a reactor vessel (1), a reactor tube (2) and a reactor bottom (15) within the reactor vessel (1), where the reactor tube (2) consists of a main element and a surface coating and an intermediate jacket (3) is present between an outer wall of the reactor tube (2) and an inner wall of the reactor vessel (1), further comprising a heating device (5), at least one bottom gas nozzle (9) for introduction of fluidizing gas and also at least one secondary gas nozzle (10) for introduction of reaction gas, a feed device (11) for introducing silicon nucleus particles, an offtake conduit (14) for granular polycrystalline silicon and a facility for discharging reactor offgas (16), **characterized in that** the main element of the reactor tube consists of a base material having an ash content of < 2000 ppmw and the surface coating is a CVD coating which has a layer thickness of from 5 µm to 700 µm and comprises at least 99.995% by weight of silicon carbide.

2. Fluidized-bed reactor according to Claim 1, **characterized in that** the main element of the reactor tube (2) consists of a base material having an ash content of < 50 ppmw, preferably of a base material having an ash content of < 1 ppmw.

3. Fluidized-bed reactor according to Claim 1 or 2, **characterized in that** the base material has a coefficient of thermal expansion (average value in the range from 20 to 1000°C) of from 3.5·10⁻⁶ to 6.0·10⁻⁶ K⁻¹.

4. Fluidized-bed reactor according to Claim 3, **characterized in that** the coefficient of thermal expansion of the base material corresponds to the coefficient of thermal expansion of silicon carbide (4.6·10⁻⁶ to 5.0·10⁻⁶ K⁻¹).

5. Fluidized-bed reactor according to Claim 3, **characterized in that** the base material is isostatically pressed graphite or carbon fiber-reinforced carbon (CFC material) or a carbon-carbon (C/C) composite material or a rolled-up graphite foil.

6. Fluidized-bed reactor according to Claim 5, **characterized in that** the base material is isostatically pressed graphite.

7. Fluidized-bed reactor according to any of Claims 1 to 6, wherein the CVD coating has a layer thickness of 15-500 µm.

8. Fluidized-bed reactor according to any of Claims 1 to 7, wherein the intermediate jacket (3) comprises an insulation material and is filled or flushed with an inert gas.

9. Process for producing granular polycrystalline silicon, comprising the fluidization of silicon nucleus particles by means of a gas flow in a fluidized bed which is heated by means of a heating device, where polycrystalline silicon is deposited on the hot silicon nucleus particle surfaces by addition of a silicon-containing reaction gas, as a result of which the granular polycrystalline silicon is formed, **characterized in that** it is carried out in a fluidized-bed reactor according to any of Claims 1 to 8.

10. Process according to Claim 9, wherein the granular polycrystalline silicon formed is discharged from the fluidized-bed reactor and silicon deposits on walls of reactor tube and other reactor components are subsequently removed by introduction of a corroding gas into the reaction zone.

11. Process according to Claim 10, wherein the corroding gas contains hydrogen chloride or silicon tetrachloride.

## Revendications

1. Réacteur à lit fluidisé pour la fabrication d'un granulat de silicium polycristallin, comprenant un contenant de réacteur (1), un tube de réacteur (2) et un fond de réacteur (15) à l'intérieur du contenant de réacteur (1), le tube de réacteur (2) étant constitué par un corps de base et un revêtement de surface, et une enveloppe intermédiaire (3) se trouvant entre une paroi extérieure du tube de réacteur (2) et une paroi intérieure du contenant de réacteur (1), comprenant en outre un dispositif de chauffage (5), au moins une buse de gaz de fond (9) pour l'introduction d'un gaz de fluidisation, ainsi qu'au moins une buse de gaz secondaire (10) pour l'introduction d'un gaz de réaction, un dispositif d'alimentation (11) destiné à introduire des particules germes de silicium, une conduite de soutirage (14) pour le granulat de silicium polycristallin, ainsi qu'un dispositif pour le déchargement d'un gaz d'échappement du réacteur (16), **caractérisé en ce que** le corps de base du tube de réacteur est constitué par un matériau de base ayant une teneur en cendres < 2 000 ppm en poids et le revêtement de surface est un revêtement CVD ayant une épaisseur de couche de 5 µm à 700 µm, qui est constitué par au moins 99,995 % en poids de carbure de silicium.

2. Réacteur à lit fluidisé selon la revendication 1, **caractérisé en ce que** le corps de base du tube de réacteur (2) est constitué par un matériau de base ayant une teneur en cendres < 50 ppm en poids, de préférence par un matériau de base ayant une teneur en cendres < 1 ppm en poids.

3. Réacteur à lit fluidisé selon la revendication 1 ou 2, **caractérisé en ce que** le matériau de base a un coefficient d'expansion thermique (valeur moyenne entre 20 et 1 000 °C) de 3,5 · 10⁻⁶ à 6,0 · 10⁻⁶ K⁻¹.

4. Réacteur à lit fluidisé selon la revendication 3, **caractérisé en ce que** le coefficient d'expansion thermique du matériau de base correspond au coefficient d'expansion thermique du carbure de silicium (4,6 10⁻⁶ à 5,0 · 10⁻⁶ K⁻¹ ).

5. Réacteur à lit fluidisé selon la revendication 3, **caractérisé en ce que** le matériau de base est du graphite comprimé isostatiquement ou du carbone renforcé par des fibres de carbone (matériau CFC) ou un matériau composite carbone-carbone (C/C) ou une feuille de graphite enroulée.

6. Réacteur à lit fluidisé selon la revendication 5, **caractérisé en ce que** le matériau de base est du graphite comprimé isostatiquement.

7. Réacteur à lit fluidisé selon l'une quelconque des revendications 1 à 6, dans lequel le revêtement CVD présente une épaisseur de couche de 15 à 500 µm.

8. Réacteur à lit fluidisé selon l'une quelconque des revendications 1 à 7, dans lequel l'enveloppe intermédiaire (3) comprend un matériau isolant et est remplie ou rincée avec un gaz inerte.

9. Procédé de fabrication d'un granulat de silicium polycristallin comprenant la fluidisation de particules germes de silicium au moyen d'un courant gazeux dans un lit fluidisé qui est chauffé au moyen d'un dispositif de chauffage, du silicium polycristallin étant déposé sur les surfaces chaudes des particules germes de silicium par ajout d'un gaz de réaction contenant du silicium et le granulat de silicium polycristallin étant ainsi formé, **caractérisé en ce qu'**il est réalisé dans un réacteur à lit fluidisé selon l'une quelconque des revendications 1 à 8.

10. Procédé selon la revendication 9, dans lequel le granulat de silicium polycristallin formé est déchargé du réacteur à lit fluidisé, puis les dépôts de silicium sur les parois du tube de réacteur et d'autres composants du réacteur sont éliminés par introduction d'un gaz décapant dans la zone de réaction.

11. Procédé selon la revendication 10, dans lequel le gaz décapant contient du chlorure d'hydrogène ou du tétrachlorure de silicium.
